(19) Europäisches Patentamt
European Patent Office
Office européen des brevets

(11) **EP 3 052 774 B1**

(12) **EUROPÄISCHE PATENTSCHRIFT**

(45) Veröffentlichungstag und Bekanntmachung des Hinweises auf die Patenterteilung:
**26.12.2018 Patentblatt 2018/52**

(21) Anmeldenummer: **14756021.3**

(22) Anmeldetag: **20.08.2014**

(51) Int Cl.:
**F01N 3/08** (2006.01)    **F02D 41/02** (2006.01)

(86) Internationale Anmeldenummer:
**PCT/EP2014/067705**

(87) Internationale Veröffentlichungsnummer:
**WO 2015/036208 (19.03.2015 Gazette 2015/11)**

(54) **VERMINDERUNG VON N2O IM ABGAS VON MAGER VERBRENNENDEN VERBRENNUNGSMOTOREN**

REDUCTION OF N2O IN THE EXHAUST GAS OF LEAN-BURN INTERNAL COMBUSTION ENGINES

RÉDUCTION DE N2O DANS LES GAZ D'ÉCHAPPEMENT DE MOTEURS À COMBUSTION PAUVRE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: **11.09.2013 DE 102013218234**

(43) Veröffentlichungstag der Anmeldung:
**10.08.2016 Patentblatt 2016/32**

(73) Patentinhaber: **Umicore AG & Co. KG**
**63457 Hanau-Wolfgang (DE)**

(72) Erfinder:
• **ADAM, Frank**
**63589 Linsengericht (DE)**
• **ECKHOFF, Stephan**
**63755 Alzenau (DE)**
• **MUELLER, Sebastian**
**63477 Maintal (DE)**

(56) Entgegenhaltungen:
EP-A1- 1 386 656    DE-C1- 19 543 219
GB-A- 2 424 197

**Beschreibung**

Die vorliegende Erfindung richtet sich auf ein Verfahren zur Abgasnachbehandlung von mager betriebenen Verbrennungsmotoren. Insbesondere bezieht sich die vorliegende Erfindung auf die Reduzierung des Anteils der Sekundäremissionen, insbesondere des Treibhausgases $N_2O$ im Gesamtabgas eines Abgasnachbehandlungssystems mit mind. einem NOx-Speicherkatalysator als Abgasreinigungselement.

Bei mager betriebenen Verbrennungsmotoren (Diesel, SGDI) werden zur Abgasnachbehandlung häufig Stickoxidspeicherkatalysatoren (NOx-Speicherkatalysatoren, LNT, NSC) eingesetzt. Diese sind befähigt, im mageren Abgas ($\lambda > 1$) Stickoxide temporär einzuspeichern und im stöchiometrischen bzw. fetten Abgas ($\lambda \leq 1$) unter Reduktion der gespeicherten Stickoxide zu Stickstoff regeneriert zu werden (DE102011101079A1, DE19543219C1). Bei der Regeneration der NOx-Speicherkatalysatoren kann je nach Betriebsweise Distickstoffmonoxid ($N_2O$), auch Lachgas genannt, als Sekundäremission freigesetzt werden. Unter den gegebenen Abgasbedingungen ist die Reduktion des einmal gebildeten Lachgases jedoch schwierig. Bislang war die Emission von $N_2O$ aus Kraftfahrzeugen nicht reglementiert. Da Lachgas jedoch ein starkes Treibhausgas ist, wird z.B. in den USA bereits ein Grenzwert für die $N_2O$-Emission von 0,01 g/Meile diskutiert. Dieser Wert ist mit bisherigen Abgasnachbehandlungskonzepten mit NOx-Speicherkatalysatoren nur schwer zu erreichen (SAE, 2013 Umicore, 2013-01-1300 $N_2O$ Emissions of Low Emission Vehicles).

Die DE19641644A1 beschreibt ein Verfahren zur Zersetzung von $N_2O$ in Luftzerlegungsanlagen bei der Edelgasgewinnung, wobei über eine Deoxostufe gleichzeitig Methan und $N_2O$ in 98%iger sauerstoffreicher Atmosphäre katalytisch umgesetzt werden. Als Katalysatoren werden Pt, Pd, Au oder Ag-haltige Katalysatoren vorgeschlagen, die in einem Temperaturbereich von 400-600°C betrieben werden. Für die Abgasreinigung von mager betriebenen Verbrennungsmotoren eignet sich dieses Verfahren zur $N_2O$ Reduktion nicht, da hier die Temperaturen im Katalysator zwischen 200-450°C liegen. Bei diesen Temperaturen ist in magerer Atmosphäre der $N_2O$-Umsatz nur sehr gering.

EP1536111B1 beschreibt ein Verfahren zur Verminderung von Sekundäremissionen wie Methan oder $N_2O$ im Abgas von Verbrennungsmotoren, die mit NOx-Speicherkatalysatoren ausgerüstet sind. Um die Sekundäremissionen vermindern zu können, welche während des Fettbetriebes zur Regeneration des NOx-Speicherkatalysators über letzterem gebildet werden, wird vorgeschlagen, einen zusätzlichen Katalysator abstromseitig des NOx-Speicherkatalysators anzuordnen. Dieser Katalysator ist in der Lage, Methan und $N_2O$ zu oxidieren und besteht aus zwei verschiedenen katalytisch wirkenden Materialien. Zur Oxidation von Methan wird ein palladiumhaltiger Katalysator vorgeschlagen und zur Verminderung von $N_2O$ ein Fe-Zeolith Katalysator. Es ist bekannt, dass Methan bzw. $N_2O$ in magerer Atmosphäre effektiv über palladiumhaltige bzw. Fe-Zeolith Katalysatoren umgesetzt werden können. Allerdings ist die Umsetzung von $N_2O$ in magerer Atmosphäre über Pd-Katalysatoren sehr gering und die Umsetzung über Fe-Zeolith Katalysatoren erfolgt erst bei höheren Temperaturen von über ca. 400°C. Zur Sicherstellung, dass der Katalysator zur $N_2O$-Reduktion deutlich mager betrieben wird, was zur Umsetzung des Methans auch sicherlich sinnvoll ist, schlägt die EP1536111B1 zusätzlich eine Sekundärlufteinblasung vor dem abstromseitig angeordnetem Katalysator vor. Wie eingangs beschrieben führt dies jedoch nicht zu der gewünschten $N_2O$-Verminderung bei niedrigen Temperaturen.

Die DE102010014468A1 richtet sich auf ein Verfahren zur Abgasnachbehandlung von im Wesentlichen mager betriebenen Verbrennungsmotoren sowie ein entsprechendes vorteilhaftes Abgasnachbehandlungssystem. Insbesondere bezieht sich diese Erfindung auf die Reduzierung des Anteils des Treibhausgases $N_2O$ im Gesamtabgas eines entsprechenden Verbrennungssystems mit einem NOx-Speicherkatalysator als Abgasreinigungselement. Ziel der Erfindung ist es, den nach dem NOx-Speicherkatalysator angeordneten $N_2O$-Verminderungskatalysator unter $A \leq 1$ Bedingungen zu betreiben, sobald das vom NOx-Speicherkatalysator gebildeten $N_2O$ den $N_2O$-Verminderungskatalysator erreicht.

Es ist bekannt, dass die $N_2O$-Bildung an einem Dreiwegkatalysator bei stöchiometrisch betriebenen Verbrennungsmotoren in einem bestimmten Temperaturintervall und bei bestimmten $\lambda$-Werten besonders intensiv ist (Hausberger, ACCC-Workshop "$N_2O$ und das Kyoto-Ziel", http://www.accc.gv.at/pdf/no-hausberger.pdf; Gifhorn et al., Einfluss abgasspezifischer Parameter auf die N2O-Bildung am Pd/Rh-Katalysator, MTZ Motortechnische Zeitschrift 59 (1998) 6). Pihl et al. beschreiben die Entstehung von u.a. $N_2O$ bei der Regeneration von NOx-Speicherkatalysatoren. Insbesondere wird darauf hingewiesen, dass die Entstehung von $N_2O$ durch eher niedrige Temperaturen und durch häufige fettmager-Wechsel forciert wird. Als Lösung wird angeboten, einen größeren NOx-Speicherkatalysator heranzuziehen (Lean NOx Trap Chemistry Under Lean-Gasoline Exhaust Conditions: Impact of High NOx Concentrations and High Temperature; Pihl, Josh A.; Lewis, Jennifer A.; Toops, Todd J.; Parks, James E., Topics in Catalysis, vol. 56, issue 1-8 May 2013, p. 89 - 93).

Aus der DE10249026B4 ist ein Verfahren bekannt, bei dem in Abhängigkeit der Temperatur des Speicherkatalysators bestimmte feste Luft/Kraftstoff-Verhältnisse zur Regeneration im Abgas eingestellt werden. Die EP1386656A1 beschreibt verschiedene Regenerationsstrategien in Abhängigkeit der Abgastemperatur zur Reduktion von Stickoxidspeicherkatalysatoren. Die GB2424197B lehrt, dass mit unterschiedlichen Profilen des Kraftstoffpulses, welche in Abhängigkeit des verendeten Speichermaterials gewählt werden, eine bessere Regeneration eines Stickoxidspeicherkatalysators einhergehen kann. In beiden Veröffentlichungen wird die $N_2O$-Problematik nicht angesprochen.

Alles in allem ist zu verzeichnen, dass aus dem Stand der Technik nur ungenügende Methoden zur Reduktion des Treibhausgases $N_2O$, welches bei der Regeneration von Stickoxidspeicherkatalysatoren im Abgas von mager betriebenen Verbrennungsmaschinen, insbesondere Benzinmotoren entsteht, bekannt sind.

Aufgabe der vorliegenden Erfindung war es deshalb, eine Möglichkeit anzugeben, um die $N_2O$-Bildung bei der Regeneration von Stickoxidspeicherkatalysatoren maximal zu unterdrücken. Diese und weitere sich aus dem Stand der Technik für den Fachmann in naheliegender Weise ergebenden Aufgaben werden durch ein Verfahren mit den Merkmalen des vorliegenden Anspruchs 1 gelöst. Weitere bevorzugte Ausgestaltungen der Erfindung sind in den von Anspruch 1 abhängigen Unteransprüchen adressiert.

Dadurch, dass man unterschiedliche Strategien bei der Regeneration von einem oder mehreren, ggf. hintereinander angeordneten Stickoxidspeicherkatalysatoren zur Verminderung der $N_2O$-Bildung während der Regeneration verwendet, in dem man die unterschiedlichen Regenerationsstrategien in Abhängigkeit der Temperatur des Abgases dergestalt gezielt auswählt, dass unterhalb einer Grenztemperatur, welche innerhalb eines Temperaturbereichs von 275°C - 290°C liegt, die Regeneration mit einem kürzeren, dafür aber fetteren Puls an Kraftstoff erfolgt als oberhalb dieses Temperaturbereichs, gelangt man äußerst überraschend, dafür aber nicht minder vorteilhaft zur Lösung der gestellten Aufgabe. Mit der hier besprochenen Maßnahme lassen sich die $N_2O$-Emissionen im Abgas soweit mindern, dass z.B. die in USA anvisierten Grenzwerte an $N_2O$-Emissionen eingehalten werden können.

Wie eben angedeutet, sollen die Regenerationsstrategien, welche vorliegend zur Regeneration eines oder mehrerer, ggf. hintereinander, vorzugsweise direkt hintereinander angeordneten Stickoxidspeicherkatalysatoren herangezogen werden, in Abhängigkeit der Temperatur gezielt ausgewählt werden. Die Regeneration mit Reduktionsmittelpulsen erfolgt so, dass man aus einer Gruppe von zwei verschiedenen Reduktionsmittelpulsen den jeweils kürzeren, dafür aber fetteren Puls auswählt, sobald die ECU erkennt, dass der zu regenerierende Katalysator sich unterhalb des angegebenen Temperaturbereichs befindet. Oberhalb dieses Temperaturbereichs sind auf jeden Fall weniger fette Pulse als solche, die vorteilhaft unterhalb des Temperaturbereichs eingesetzt werden, bevorzugt.

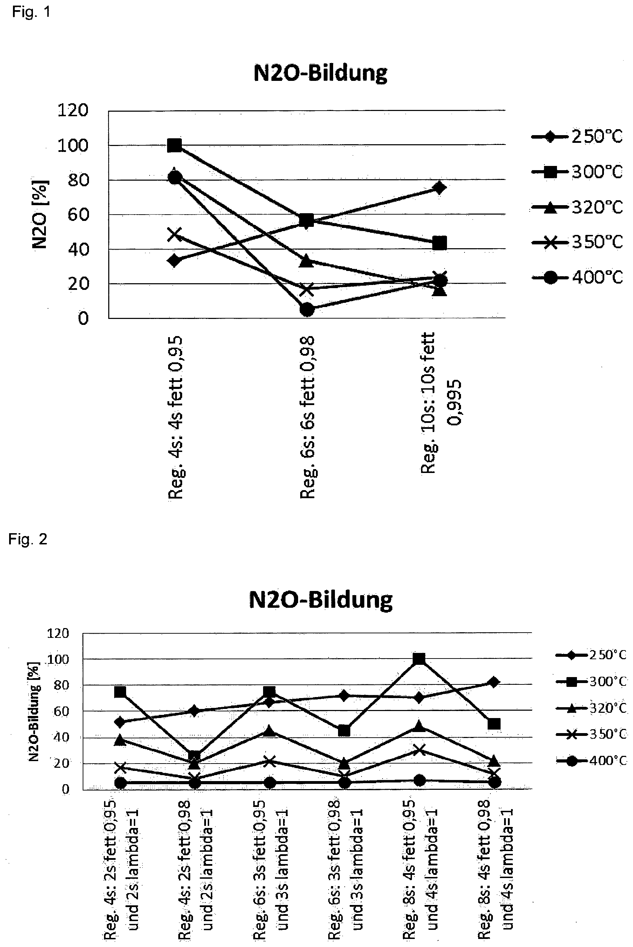

Aus Fig. 1 ist direkt ersichtlich, dass kürzere und intensivere symmetrische Pulse an Reduktionsmitteln die Bildung von $N_2O$ unterhalb des Temperaturbereichs drastisch senken können (von ca. 80% auf unter 40% bezogen auf die höchste Emission im Test). Oberhalb des Temperaturbereichs ergibt sich ein differenzierteres Bild. Hier findet sich bei dieser Regenerationsstrategie das Ergebnis (Fig. 1), dass je nach vorhandener Temperatur (z.B. 300 und 320 °C) entweder lange, weniger fette Pulse (z.B. mehr als 5 Sekunden, bevorzugt mehr als 7 Sekunden und A >0,99 - <1) bessere Ergebnisse liefern oder oberhalb des Temperaturbereiches von 330 - 345°C verglichen hiermit kürzere, moderat fettere Pulse (z.B. mehr als 5 Sekunden, bevorzugt weniger als 7 Sekunden und A >0,96 - <0,99) zu bevorzugen sind.

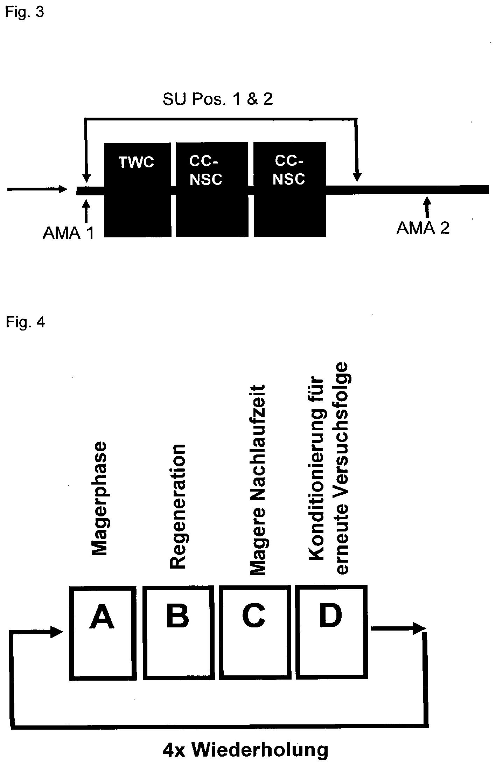

Fig. 2 zeigt ein ähnliches Bild für eine fett/A=1-Strategie (Erläuterung s. unten). Bei unter ca. 300°C ist die Entstehung von $N_2O$ während der hier angewandten Regenerationsstrategie dann besonders vorteilhaft, wenn kurze und intensiv fette Pulse (z.B. unter 3 Sekunden und einem A von >0,90 - <0,96) verwendet werden, wohingegen sich oberhalb des Temperaturbereichs wiederum ein differenzierteres Bild ergibt. Hier sind die jeweils weniger fetten Pulse bevorzugt mit einer Tendenz zu kürzeren Regenerationszeiten (z.B. unter 3 Sekunden und einem $\lambda$ von >0,96 - <0,99). Beim Vergleich der Strategien bei 250°C bzw. 300°C in Figur 2 wird dieses am beispielhaft vermessenen System (Fig. 3) besonders deutlich. Während bei 250°C die Strategie "Reg. 4s: 2s fett 0,95 und 2s lambda=1" zu bevorzugen ist, ist dies bei 300°C die Strategie "Reg. 4s: 2s fett 0,98 und 2s lambda=1" (Fig. 2). Oberhalb des angegebenen Temperaturbereichs entwickelt sich die $N_2O$-Bildung im Hinblick auf die eingesetzte fett/$\lambda$=1-Strategie dann fast gleichförmig weiter, bis bei einer Temperatur von 400°C fast kein Unterschied mehr zwischen den einzelnen Regenerationsstrategien zu verzeichnen ist (Fig. 2).

Welche Regenerationsstrategie oberhalb der Temperaturobergrenze schlussendlich die Beste ist, muss der Fachmann anhand seines konkreten Abgassystems und der Umgebungsbedingungen, wie z.B. Temperatur, Alterungszustand des Katalysators, Art des Reduktionsmittels, Abgasgeschwindigkeit und Abgaszusammensetzung beurteilen. Generell gilt jedoch die anspruchsgemäße Marschrichtung, da offensichtlich im angegebenen Temperaturbereich von 275 - 290°C ein Wechsel des $N_2O$-Bildungsmechanismusses stattfindet, der durch die erfindungsgemäße Auswahl der Regenerationsstrategien abgefangen werden kann. Je nach eingesetztem Stickoxidspeicherkatalysator, Alterungszustand des Katalysators, Abgasgeschwindigkeit, System oder Abgaszusammensetzung kann dieser Wechsel im oben angegebenen Temperaturfenster von 275°C bis 290°C variieren. Die Grenztemperatur liegt bevorzugt im Temperaturintervall von 280 - 290°C und besonders bevorzugt um 285°C. Generell kommt die vorliegende Erfindung bevorzugt im Bereich fetten Abgases bis $\lambda \geq 0,87$, mehr bevorzugt $\lambda \geq 0,9$ und besonders bevorzugt $A \geq 0,93$ zur Anwendung. Unter dem Terminus "fett" ist erfindungsgemäß eine Abgaszusammensetzung zu verstehen, die ein $A < 1$ aufweist.

In einer ersten Annäherung erfolgt die Regeneration eines Stickoxidspeicherkatalysators wie bereits oben angesprochen durch Absenken des $\lambda$-Wertes des Abgases und Überleiten des so entstandenen Abgasgemisches über den Stickoxidspeicherkatalysator. Die Temperatur des Speicherkatalysators sollte hierzu vorzugsweise in einem Temperaturfenster zwischen 200°C und 450°C liegen, so dass einerseits eine schnelle Reduktion sichergestellt wird und andererseits keine Desorption ohne Konvertierung der wieder freigegebenen Stickoxide stattfindet, was durch zu hohe Temperaturen ausgelöst werden kann. Im Vordergrund steht stets die Aufgabe, den oder die Stickoxidspeicherkatalysator(en) mit einer möglichst geringen Menge an zusätzlichem Kraftstoff effizient und effektiv von gespeicherten Stickoxiden zu befreien.

Die Wahl der Regenerationsstrategie in Abhängigkeit der Temperatur bedeutet, dass je nach Temperatur des Abgases unterschiedliche Regenerationsstrategien zur Anwendung kommen sollen. Hierzu kann es durchaus sinnvoll sein, den Temperaturbereich der Regeneration unter Berücksichtigung der erfindungsgemäßen Randbedingungen in mehrere Temperaturfenster aufzuteilen, in denen dann unterschiedliche Regenerationsstrategien vorteilhaft zum Einsatz kommen können. Dabei kann das Temperaturfenster für die Regeneration von 200 - 450°C vorzugsweise in zwei oder mehr, besonders bevorzugt in 4 Bereiche aufgeteilt werden, in denen jeweils unterschiedliche Strategien herangezogen werden (Tabelle 1). Je nach Anforderung und Umgebungsbedingungen können hier entsprechend oben Gesagtem auch 5 oder mehr Temperaturfenster vom Fachmann definiert werden, in denen unterschiedliche Regenerationsstrategien angewendet werden. Als Beispiel mag folgende Aufteilung und Auswahl an Strategien dienen:

I. Temperaturfenster ~230-275 °C Strategie 1
II. Temperaturfenster ~290-330 °C Strategie 3, 6, 8, 9 (bevorzugt 3)
III. Temperaturfenster ~345-400°C Strategie 3, 6, 8 (bevorzugt 3)
IV. Temperaturfenster > 400 °C Strategie 2 - 8

Bei mehreren gleich guten Strategien wird vorzugsweise die gewählt, die mit den oben genannten Effizienzkriterien am kompatibelsten ist. Auch sollten möglichst wenig weitere schädliche Emissionen auftreten. Der Fachmann wird hier eine optimale Auswahl treffen können.

Als Regenerationsstrategien für das hier betrachtete System (Fig. 3) wurden folgende Abläufe vordefiniert (Tabelle 1):

Tabelle 1

| Reg.-strat.: | |
|---|---|
| 1 | Reg. 4s: 4s fett 0,95 |
| 2 | Reg. 4s: 2s fett 0,95 und 2s lambda=1 |
| 3 | Reg. 4s: 2s fett 0,98 und 2s lambda=1 |
| 4 | Reg. 6s: 6s fett 0,98 |
| 5 | Reg. 6s: 3s fett 0,95 und 3s lambda=1 |
| 6 | Reg. 6s: 3s fett 0,98 und 3s lambda=1 |
| 7 | Reg. 8s: 4s fett 0,95 und 4s lambda=1 |
| 8 | Reg. 8s: 4s fett 0,98 und 4s lambda=1 |
| 9 | Reg. 10s: 10s fett 0,995 |

Wie schon angedeutet können die jeweiligen Regenerationen mit symmetrischen, gleichförmigen Kraftstoffpulsen (Strategie 1, 4 und 9) oder so ausgestaltet werden, dass eine Modulation der $\lambda$-Amplitude des Regenerationspulses dergestalt vorgesehen wird, dass ein Fettpuls unmittelbar gefolgt wird von einer Phase mit einem Abgasgemisch bei A = 1 (fett/$\lambda$=1-Strategie). Die Verwendung einer solchen Regenerationsstrategie hat sich oberhalb des oben genannten Temperaturbereichs von 275°C bis 290°C als vorteilhaft erwiesen. So ist insbesondere die Regenerationsstrategie 3 in Bezug auf das hier geprüfte Abgassystem vorteilhaft oberhalb dieses Temperaturbereichs anwendbar. Die anzuwendenden Regenerationsdauern (einzelne Phasen mit $\lambda \leq 1$ mit dem Ziel der Entstickung der Stickoxidspeicherkatalysatoren) liegen in der Regel im Bereich von Sekunden, vorzugsweise unterhalb von 10 sec., mehr bevorzugt unterhalb von 8 und besonders bevorzugt unterhalb von 6 sec.

Die vorliegende Erfindung wird bevorzugt bei so genannten strahlgeführt und geschichtet betriebenen mager verbrennenden Benzinmotoren (sogenannte "lean GDI" Motoren) eingesetzt. Ein mager verbrennender Benzinmotor kann im so genannten Homogenbetrieb oder im Schichtladebetrieb (geschichtet betriebener Ottomotor) arbeiten. Unter dem Schichtladebetrieb versteht der Fachmann eine Betriebsart des Motors, bei der das Gemisch um die zentral im Brennraum positionierte Zündkerze konzentriert wird, wobei in den Randbereichen des Brennraums sich reine Luft befindet. Die damit verbundene Verbrauchseinsparung resultiert zum einen aus der Entdrosselung des Motors, zum anderen in nicht unerheblichem Maße aus den minimierten Wärmeverlusten, die durch die zentral im Brennraum ablaufende Verbrennung mit umgebender isolierender Lufthülle ermöglicht werden. Der Kraftstoff wird in diesem Modus erst im letzten Drittel der Kolbenaufwärtsbewegung eingespritzt. Durch die Kombination von gezielter Luftströmung und spezieller Geometrie des Kolbens, der über eine ausgeprägte Kraftstoff- und Strömungsmulde verfügt, wird der besonders fein zerstäubte Kraftstoff in einem sogenannten "Gemischballen" optimal um die Zündkerze konzentriert und sicher entflammt. Für die jeweils optimale Anpassung der Einspritzparameter (Einspritzzeitpunkt, Kraftstoffdruck) sorgt die Motorsteuerung (Der neue V6 Ottomotor mit Direkteinspritzung von Mercedes Benz; Wien 2010; A. Waltner et al.;V6 und V8-Ottomotoren; MTZ extra April 2012; G. Doll et al.; Handbuch Verbrennungsmotor; 2. Auflage 2002 Vieweg Verlag; A. Koch, K. Wenzlawski; H. Tschöke, G.P. Merker). Im Gegensatz zum wandgeführten Einspritzen von Kraftstoff wird beim strahlgeführten Injizieren des Kraftstoffs in den Zylinder dieser beim Ansaugen in unmittelbarer Nähe der Zündkerze eingespritzt und verdampft dort. Eine exakte Positionierung von Zündkerze und Einspritzdüse sowie eine präzise Strahlausrichtung sind erforderlich, um das Gemisch zum richtigen Zeitpunkt entzünden zu können. Dieses System soll Leistung steigern und Kraftstoffverbrauch senken helfen (Guido Vent, Aachen 2012, The new 2,0 l turbo engine; Lückert, Wiener Motorensymposium 2011, Potenziale strahlgeführter Brennverfahren in Verbindung mit Downsizing Konzepten).

Die hier beschriebene Verwendung von unterschiedlichen Regenerationsstrategien wird wie gesagt im Abgas mager verbrennender Motoren, vorzugsweise Benzin- oder Ottomotoren eingesetzt. Im Teillastbereich von Ottomotoren wird der spezifische Kraftstoffverbrauch durch Betrieb mit Luftüberschuss ($\lambda > 1$ oder hos (Homogen-Schicht Betrieb)), dem sogenannten Magerbetrieb, verringert. Im Magerbetrieb erhöht sich infolge des Luftüberschusses die Gesamtladungsmasse und damit auch die effektive Verdichtung, was steigende Temperaturen und Drücke nach der Kompression bewirkt. Die freigesetzte Wärmemenge bei der Verbrennung wird einer größeren Ladungsmasse zugeführt, wodurch die mittlere Prozesstemperatur allerdings sinkt; was ein in Summe kälteres Abgas bedingt. Dies ist im Hinblick auf die Regeneration der Stickoxidspeicherkatalysatoren und insbesondere die $N_2O$-Bildung während der Regeneration beachtlich.

Durch die Art der Verbrennung bedingt entstehen im Motor mager verbrennender Ottomotoren auch Stickoxide. Es sind verschiedenste Techniken bekannt, wie die Erhöhung der Konzentration der zur Reduktion der Stickoxide benötigten reduzierenden Bestandteilen (erfindungsgemäß als Reduktionsmittelpulse tituliert) im Abgas vonstattengehen kann. Hierzu wird auf die einschlägig bekannte Literatur verwiesen (Handbuch Verbrennungsmotor, Vieweg Verlag, 2002, 2. Auflage Basshuysen/Schäfer). Das Hinzufügen des Kraftstoffs zum Abgas kann durch Einspritzen direkt in den Abgasstrang stromauf zum Stickoxidspeicherkatalysator oder durch Einspritzen von Kraftstoff in den Zylinder des Motors bewerkstelligt werden. Zu ersterem sind besondere Mittel erforderlich, die eine Injektion des Kraftstoffs in den Abgasstrom erlauben (WO11124357A1). Die Regeneration eines Stickoxidspeicherkatalysators wird jedoch in der Regel dadurch initiiert, dass das Abgas des mager verbrennenden Motors in den stöchiometrischen ($\lambda = 1$) bzw. besser in den fetten Bereich ($\lambda < 1$) durch Hinzugabe von Kraftstoff in den Zylinder angehoben und über den Stickoxidspeicherkatalysator geleitet wird. Die Steuerung der Regeneration des Stickoxidspeicherkatalysators erfolgt in der Regel sensorgesteuert oder modellbasiert (Der neue 2,0-I-TDI-Motor von Volkswagen für niedrigste Abgasgrenzwerte, MTZ Mai 08; J. Hadler et al.).

Es sei angemerkt, dass eine Regeneration bei $\lambda < 0,9$ vermehrt zur Bildung von $NH_3$ als zusätzliche Sekundäremission führt. Daher wird dieser Bereich als anzuwendende Regenerationsstrategie vorliegend nach Möglichkeit ausgeschlossen. Soll $NH_3$ jedoch bewusst gebildet werden, z.B. weil dies auf einem abströmseitig angeordneten SCR-Katalysator eingespeichert werden soll, so sind auch derartige Bereiche vorliegend mit ins Kalkül zu ziehen.

Die vorliegende Erfindung ist im Prinzip auf den Einsatz jedweder Stickoxidspeicherkatalysatoren im Abgas mager verbrennender Motoren, insbesondere der oben erwähnten strahlgeführt und geschichtet betriebenen mager verbrennenden Benzinmotoren anzuwenden. Sie kann besonders gut mit einem System betrieben werden, welches ein oder mehrere motornah angeordnete Dreiwegkatalysatoren und ein oder mehrere motornah befindliche Stickoxidspeicherkatalysatoren als Abgasreinigungssystem vorsieht. Ganz besonders bevorzugt enthält das System einen motornah angeordneten Dreiwegkatalysator in Verbindung mit zwei motornah befindlichen Stickoxidspeicherkatalysatoren (Fig. 3). Unter motornah wird ein Bereich im Abgasstrang verstanden, der maximal 1 m, vorzugsweise maximal 80 cm oder mehr bevorzugt maximal 50 cm vom Auslass des Abgases aus dem Motorblock entfernt ist.

Als Dreiwegkatalysatoren können im Prinzip alle dem Fachmann für diesen Zweck in Frage kommende Katalysatoren herangezogen werden (F. Adam et al.; Emission Control, Dresden 2010, Katalysatortechnologien für stöchiometrisch und mager betriebene Otto-Motoren mit dem Ziel der CO2 Reduktion, Kapitel 3. Verbesserung der Katalysatorformulierungen für die magere Abgasnachbehandlung).

Die Arbeitsweise von Stickoxid-Speicherkatalysatoren wird ausführlich in der SAE-Schrift SAE950809 beschrieben. Die Speicherphase für Stickoxide (Magerbetrieb) dauert gewöhnlich 100 bis 2000 Sekunden und hängt von der Speicherkapazität des Katalysators und der Konzentration der Stickoxide im Abgas ab. Bei gealterten Katalysatoren mit verminderter Speicherkapazität kann die Dauer der Speicherphase aber auch auf 50 Sekunden und weniger absinken. Die Regenerationsphase (Fettbetrieb) ist dagegen immer wesentlich kürzer und dauert nur wenige Sekunden (2s - 20s). Das während der Regeneration aus dem Stickoxid-Speicherkatalysator austretende Abgas weist im Wesentlichen keine Schadstoffe mehr auf und ist annähernd stöchiometrisch zusammengesetzt. Seine Luftzahl $\lambda$ (Lambda: zeigt das Ver-

hältnis von Kraftstoff zu Luft im Abgas an - siehe unten) ist während dieser Zeit nahezu gleich 1.

Stickoxidspeicherkatalysatoren sind dem Fachmann hinlänglich bekannt. In Bezug auf ihre Ausgestaltung wird auf die einschlägige Literatur verwiesen (DE102009039249A, DE102008048854A, WO13008342A1, WO12140784A1, WO2011023332A, WO2005092481A, EP1317953A1, EP1016448B1, EP1321186B1, EP1911506A sowie EP1101528A). Bei den Stickoxid-Speichermaterialien handelt es sich in der Regel um basische Verbindungen der Alkali- oder Erdalkalimetalle, die auf geeigneten Trägermaterialien in fein verteilter Form aufgebracht sind. Darüber hinaus weist ein Stickoxid-Speicherkatalysator noch katalytisch aktive Edelmetalle der Platingruppe und Sauerstoff-Speichermaterialien auf. Diese Zusammensetzung verleiht einem Stickoxid-Speicherkatalysator unter stöchiometrischen Betriebsbedingungen die Funktion eines Dreiweg-Katalysators (DE102009039249A sowie dort zitierte Literatur).

Als Speicherkomponenten in Stickoxidspeicherkatalysatoren werden vorwiegend die basischen Verbindungen der Alkalimetalle, der Erdalkalimetalle, insbesondere aber Bariumoxid, und der Seltenerdmetalle, insbesondere Ceroxid, eingesetzt, welche mit Stickstoffdioxid zu den entsprechenden Nitraten reagieren. Als Cer-haltiges Speichermaterial kommt bevorzugt ein solches ausgewählt aus der Gruppe bestehend aus Ceroxid, ein Cer-Zirkon-Mischoxid, ein mit Seltenen Erden dotiertes Ceroxid und Kombinationen davon in Frage. Bevorzugt erfolgt eine Dotierung des Cer/Zirkon-Mischoxids mit 0,5 bis 10 Gew.-% Lanthan- und/oder Praseodymoxid, bezogen auf das Gesamtgewicht von Cer/Zirkon-Mischoxid und Lanthan- und/oder Praseodymoxid. Bevorzugte basische Speichermaterialien sind Verbindungen enthaltend Mg, Ba, Sr, Ca. Es ist bekannt, dass diese Materialien an Luft zum überwiegenden Teil in Form von Carbonaten und Hydroxiden vorliegen. Diese Verbindungen eignen sich ebenfalls zur Speicherung der Stickoxide. Wenn daher im Rahmen der Erfindung von den basischen Erdalkalimetall-haltigen Speichermaterialien gesprochen wird, so sind damit auch die entsprechenden Carbonate und Hydroxide eingeschlossen. Als katalytisch aktive Komponenten werden gewöhnlich die Edelmetalle der Platingruppe (z.B. Pt, Pd, Rh) verwendet, die wie die Speicherkomponente auf einem Trägermaterial abgeschieden werden. Geeignete Trägermaterialien für die Komponenten sind temperaturstabile Metalloxide mit hoher Oberfläche von mehr als 10 $m^2$/g, die eine hochdisperse Abscheidung der Speicherkomponenten ermöglichen. Geeignet sind beispielsweise Ceroxid und Cerhaltige Mischoxide, Aluminiumoxid, Magnesiumoxid, Magnesium-Aluminium-Mischoxide, Seltene Erden und einige ternäre Oxide. Als Trägermaterial wird überwiegend aktives, hochoberflächiges Aluminiumoxid eingesetzt. Der durch Anwendung des beschriebenen Verfahrens vorteilhaft einsetzbare Stickoxidspeicherkatalysator wird als Wandbeschichtung (Coating) in seinen bevorzugten Ausführungsformen auf einem inerten Tragkörper aus Keramik oder Metall aufgebracht. Als Tragkörper für automobile Anwendungen sind Durchflusswabenkörper aus Keramik oder Metall gut geeignet. Der hier ins Auge gefasste Stickoxidspeicherkatalysator kann auch auf oder in einem Partikelfilter als Tragkörper vorliegen (EP1837497A1, EP1398069A2, DE102009039249A). Der Terminus "auf oder in" bezeichnet dabei die Möglichkeit einer Beschichtung auf der Wand oder in den porösen Hohlräumen derselben.

Neben den oben angesprochenen Speichermaterialien enthalten die vorliegenden Stickoxidspeicherkatalysatoren wie gesagt auch Edelmetalle. Der Fachmann orientiert sich bzgl. der Menge und Art an den eingangs zu den Katalysatoren notierten Stand der Technik. Als Edelmetalle werden vorzugsweise solche ausgewählt aus der Gruppe bestehend aus Palladium, Platin und Rhodium eingesetzt. Die Mengenverhältnisse können nach dem Fachmann zur Verfügung stehenden Wissenstand entsprechend gewählt werden, vorteilhafter Weise liegt der Gehalt an Platin im Speichermaterial bei 30 - 150, bevorzugt bei 40 - 100 und ganz besonders bei 50 - 70 g/cft. Im Hinblick auf Palladium ergeben sich Werte von 10 - 150, bevorzugt 20 - 100 und ganz besonders bevorzugt 30 - 80 g/cft. Auch das Rhodium ist in einer Menge von 0,5 - 10, bevorzugt 1 - 8 und ganz bevorzugt 1 - 5 g/cft im Katalysatormaterial zugegen. Das Verhältnis der Metalle zueinander liegt bei 50 - 100 : 10 - 50 : 1 - 5 (Pt : Pd : Rh), vorzugsweise bei 70 - 90 : 12 - 30 : 2 - 4 und besonders bevorzugt um 80 : 16 : 3 (jeweils $\pm$10%).

Vorteilhaft besitzt der vorgeschlagene Stickoxidspeicherkatalysator ein bestimmtes Verhältnis von Cer-haltigen zu Erdalkalimetall-haltigen Speichermaterialien. Das Verhältnis von 10:1 bis 20:1 bezieht sich dabei auf das Gewicht der Oxide dieser beiden Komponenten ($CeO_2$:Erdalkalimetalloxid). Bevorzugt beträgt das Verhältnis 12:1 bis 19:1 und ganz besonders bevorzugt liegt es zwischen 12,5:1 und 18:1. Eine ebenfalls notwendig werdende Entschwefelung eines derart aufgebauten Stickoxidspeicherkatalysators erfolgt schon bei Temperaturen von $\geq$ 500°; bevorzugt 550° - 700°C; und ganz besonders bevorzugt zwischen 600°C bis 650°C unter leicht fetten Bedingungen (DE 102013207709).

Das Verbrennungsluftverhältnis setzt die tatsächlich für eine Verbrennung zur Verfügung stehende Luftmasse $m_{L,tats}$ ins Verhältnis zur mindestens notwendigen stöchiometrischen Luftmasse $m_{L,st}$, die für eine vollständige Verbrennung benötigt wird:

$$\lambda = \frac{m_{L,tats}}{m_{L,st}}$$

Ist $\lambda$ = 1, so gilt das Verhältnis als stöchiometrisches Verbrennungsluftverhältnis mit $m_{L,tats} = m_{L,st}$; das ist der Fall, wenn alle Brennstoff-Moleküle theoretisch vollständig mit dem Luftsauerstoff reagieren können, ohne dass Sauerstoff fehlt oder unverbrannter Sauerstoff übrig bleibt.

Für Verbrennungsmotoren gilt:

$\lambda$ < 1 (z. B. 0,9) bedeutet "Luftmangel": fettes oder auch reiches Gemisch

A > 1 (z. B. 1,1) bedeutet "Luftüberschuss": mageres oder auch armes Gemisch

Aussage: A = 1,1 bedeutet, dass 10% mehr Luft an der Verbrennung teilnimmt, als zur stöchiometrischen Reaktion notwendig wäre. Dies ist gleichzeitig der Luftüberschuss.

Es sei angemerkt, dass ein solches wie vorliegend anvisiertes System auch Bestandteil in einem größeren Abgasreinigungssystem sein kann. An die motornah angeordneten Stickoxidspeicherkatalysatoren können sich beispielsweise ein oder mehrere im Unterboden angeordnete Stickoxidspeicherkatalysatoren oder SCR-Katalysatoren, vorzugsweise auf Basis von metallionenausgetauschten Zeolithen (z.B. CHA, BEA) oder zeolithähnlichen Verbindungen (z.B. SAPO) befinden.

Die vorliegende Erfindung beschreibt eine Möglichkeit, mit der die immer strenger werden Abgasnormen, insbesondere im Bereich der Stickstoffdioxidbildung bei der Regeneration von Stickoxidspeicherkatalysatoren eingehalten werden können. Vorgeschlagen wird, die Regenerationsstrategie der Stickoxidspeicherkatalysatoren temperaturabhängig zu variieren, um das sich während der Regeneration bildende $N_2O$ möglichst gering zu halten. Überraschend ist, dass mit dieser einfachen Maßnahme vorteilhafte Resultate erzielt werden können, die die Anwendung eines derartigen Systems auch unter den zukünftig noch gesetzlich zu normierenden Grenzwerten jetzt schon möglich macht.

Beschreibung der Figuren:

Figur 1 zeigt verschiedene einpulsige, symmetrische Regenerationsstrategien und die $N_2O$-Bildung während der Regeneration für unterschiedliche Temperaturen. Angegeben ist die relative $N_2O$-Bildung bezogen auf die maximal im Test gemessene, welche auf 100% gesetzt worden ist.

Figur 2 zeigt verschiedene fett/A=1-Regenerationsstrategien und die $N_2O$-Bildung während der Regeneration für unterschiedliche Temperaturen. Angegeben ist die relative $N_2O$-Bildung bezogen auf die maximal im Test gemessene, welche auf 100% gesetzt worden ist.

Fig. 3 zeigt das benutzte Abgassystem basierend auf einem motornah (cc) angeordneten Dreiwegkatalysatoren (1. cc-Brick) und zwei folgenden Stickoxidspeicherkatalysatoren (2. und 3. cc-Brick). Eingezeichnet sind auch die Sonderanalytik Positionen (SU) zur Messung von $N_2O$ und $NH_3$ und die Analyseentnahmepunkte (AMA-L1/2)zur Messung von HC, CO und NOx.

Figur 4 zeigt schematisch den Ablauf der Versuche zur Ermittlung der $N_2O$-Bildung während unterschiedlicher Temperaturen und bei Anwendung unterschiedlicher Regenerationsstrategien.

Beispiele:

Als Kriterium für die Güte einer Regeneration mit Blick auf niedrige Sekundäremissionsbildung wird sichergestellt, dass die A) Magerphase (Speicherphase) bei allen angewendeten Regenerationsstrategien vergleichbar ist. Es wird besonders auf die Parameter Temperatur, Abgaszusammensetzung und mager NOx Einspeicherung geachtet, so dass die anschließende Fettphase reproduzierbare Bedingungen vorfindet.

Es folgt eine festgelegte B) Regenerationsstrategie (Tabelle 1), um das eingespeicherte NOx umzusetzen, bevorzugt zu $N_2$. In der Testfolge wurden 9 Regenerationsvarianten angesetzt. Diese unterscheiden sich in der Regenerationsdauer und in der A-Eintauchtiefe, woraus eine unterschiedliche Abgaszusammensetzung (HC, CO und NOx) während der Regeneration resultiert. Alle Strategien weisen Abgasbedingungen $\lambda \leq 1$ auf.

Anschließend folgt eine kurze weitere C) Magerphase in der die nachfolgende Einspeicherung beurteilt wird. Hier wird ersichtlich, ob neben der hoffentlich geringen $N_2O$-Bildung auch die Qualität der Regeneration ausreichend war. Qualität wird hier verwendet als Synonym für die Fähigkeit erneut/wieder NOx einzuspeichern.

Um vergleichbare Bedingungen in der Versuchsreihe vorzufinden, folgt in D) eine Konditionierung, die sicherstellt, dass alle Speicherzentren für die erneute A) Magerphase zur Verfügung stehen. Diese Konditionierung besteht aus einer sondenabbruchgeregelten Regeneration, die verhindert, dass bei einer Strategie mit unzureichend gewählter Regenerationsdauer bzw. A-Eintauchtiefe der Katalysator mit zunehmender Versuchsfolge volläuft. Somit kann eine hohe Reproduzierbarkeit der einzelnen Messungen erzielt werden.

Die Prozedur (Fig. 4) wird jeweils 7 x pro Regenerationsstrategie wiederholt, wobei nur die letzten 4 Versuchsfolgen aufgezeichnet und entsprechende Mittelwerte gebildet werden. So kann sichergestellt werden, dass sich das System hinsichtlich der Katalysatortemperatur bereits in der ersten aufgezeichneten Versuchsfolge eingeschwungen hat. Es ist zu betonen, dass die Abweichungen zwischen den einzelnen Versuchsfolgen innerhalb derselben Regenerationsstrategie sehr gering sind.

**Patentansprüche**

1. Verwendung unterschiedlicher Strategien bei der Regeneration von einem oder mehreren Stickoxidspeicherkatalysatoren zur Verminderung der $N_2O$-Bildung während der Regeneration, wobei der Stickoxidspeicherkatalysator im Abgasstrang eines mager betriebenen Verbrennungsmotors eingesetzt wird,
   **dadurch gekennzeichnet, dass**
   man die unterschiedlichen Strategien in Abhängigkeit der Temperatur des Abgases dergestalt gezielt auswählt, dass unterhalb einer Grenztemperatur, welche innerhalb eines Temperaturbereichs von 275°C - 290°C liegt, die Regeneration mit einem kürzeren, dafür aber fetteren Puls an Reduktionsmittel Kraftstoff erfolgt als oberhalb dieses Temperaturbereichs.

2. Verwendung nach Anspruch 1,
   **dadurch gekennzeichnet, dass**
   man bei Regenerationsstrategien oberhalb dieses Temperaturbereichs eine Modulation der A-Amplitude des Regenerationspulses dergestalt vorsieht, dass ein Fettpuls gefolgt wird von einer Phase mit einem Abgasgemisch bei $\lambda$ = 1 (fett/A=1-Regenerationsstrategie).

3. Verwendung nach Anspruch 1 und/oder 2,
   **dadurch gekennzeichnet, dass**
   man möglichst kurze Regenerationszeiten von unter 10 sec. etabliert.

4. Verwendung nach einem oder mehreren der vorhergehenden Ansprüche,
   **dadurch gekennzeichnet, dass**
   während der Regeneration des einen oder mehrerer Stickoxidspeicherkatalysatoren der A-Wert des Abgases nicht unterhalb von A = 0,87 abgesenkt wird.

5. Verwendung nach einem oder mehreren der vorhergehenden Ansprüche,
   **dadurch gekennzeichnet, dass**
   die Einstellung der Abgaszusammensetzung durch Einspritzen von Kraftstoff in den Zylinder des Motors oder durch eine Einspritzvorrichtung in den Abgasstrang stromauf zum Stickoxidspeicherkatalysator bewerkstelligt wird.

6. Verwendung nach einem oder mehreren der vorhergehenden Ansprüche,
   **dadurch gekennzeichnet, dass**
   die Steuerung der Regeneration des Stickoxidspeicherkatalysators modellbasiert erfolgt.

7. Verwendung nach einem oder mehreren der vorhergehenden Ansprüche,
   **dadurch gekennzeichnet, dass**
   die Stickoxidspeicherkatalysatoren in einem Abgasreinigungssystem aufweisend einen motornah angeordneten Dreiwegekatalysator und zwei folgende Stickoxidspeicherkatalysatoren enthalten sind.

**Claims**

1. Use of different strategies for the regeneration of one or more nitrogen oxide storage catalysts to reduce the $N_2O$ formation during regeneration, wherein the nitrogen oxide storage catalyst is used in the exhaust gas system of a lean-operated combustion engine,
   **characterized in that**
   the different strategies are specifically selected based on the temperature of the exhaust gas such that, below a limit temperature that is within a temperature range of 275 °C - 290 °C, regeneration occurs with a shorter but richer pulse of reducing agent / fuel than it does at temperatures above this temperature range.

2. Use according to claim 1,
   **characterized in that**
   in regeneration strategies above this temperature range, a modulation of the λ amplitude of the regeneration pulse is provided in such a way that a rich pulse is followed by a phase with an exhaust gas mixture at λ = 1 (rich/λ=1 regeneration strategy).

3. Use according to claim 1 and/or 2,
   **characterized in that**
   shortest possible regeneration times of under 10 sec. are established.

4. Use according to one or more of the previous claims,
   **characterized in that**
   during regeneration of the one or more nitrogen oxide storage catalysts, the λ value of the exhaust gas is not reduced to below λ = 0.87.

5. Use according to one or more of the previous claims,
   **characterized in that**
   the exhaust gas composition is set by injecting fuel into the cylinder of the engine or by an injection mechanism into the exhaust gas system upstream of the nitrogen oxide storage catalyst.

6. Use according to one or more of the previous claims,
   **characterized in that**
   the regeneration of the nitrogen oxide storage catalyst is controlled based on modeling.

7. Use according to one or more of the previous claims,
   **characterized in that**
   the nitrogen oxide storage catalysts are contained in an exhaust gas purification system comprising a three-way catalyst arranged close to the engine and two subsequent nitrogen oxide storage catalysts.


**Revendications**

1. Utilisation de différentes stratégies pour la régénération d'un ou de plusieurs catalyseurs accumulateurs d'oxyde d'azote afin de réduire la formation de $N_2O$ pendant la régénération, le catalyseur accumulateur d'oxyde d'azote étant utilisé dans le système de gaz d'échappement d'un moteur à combustion interne fonctionnant en mélange pauvre,
   **caractérisée en ce que**
   les différentes stratégies sont choisies de manière ciblée en fonction de la température des gaz d'échappement de sorte que, en dessous d'une température limite, qui se situe dans une plage de température de 275 °C - 290 °C, la régénération est effectuée avec une impulsion d'agent de réduction plus courte, mais en revanche plus riche qu'au-dessus de cette plage de température.

2. Utilisation selon la revendication 1,
   **caractérisée en ce que**
   lors de stratégies de régénération au-dessus de cette plage de température, une modulation de l'amplitude λ de l'impulsion de régénération est prévue de sorte qu'une impulsion riche est suivie d'une phase avec un mélange de gaz d'échappement à λ = 1 (stratégie de régénération riche/λ=1).

3. Utilisation selon la revendication 1 et/ou 2,
   **caractérisée en ce que**
   des temps de régénération les plus courts possibles, inférieurs à 10 secondes, sont établis.

4. Utilisation selon l'une ou plusieurs des revendications précédentes,
   **caractérisée en ce que**
   pendant la régénération dudit un ou desdits plusieurs catalyseurs accumulateurs d'oxyde d'azote, la valeur λ des gaz d'échappement n'est pas abaissée à moins de $\lambda$ = 0,87.

5. Utilisation selon l'une ou plusieurs des revendications précédentes,
**caractérisée en ce que**
le réglage de la composition des gaz d'échappement est effectué par injection de carburant dans le cylindre du moteur ou par le biais d'un dispositif d'injection dans le système de gaz d'échappement en amont du catalyseur accumulateur d'oxyde d'azote.

6. Utilisation selon l'une ou plusieurs des revendications précédentes,
**caractérisée en ce que**
la commande de la régénération du catalyseur accumulateur d'oxyde d'azote est effectuée sur la base d'un modèle.

7. Utilisation selon l'une ou plusieurs des revendications précédentes,
**caractérisée en ce que**
les catalyseurs accumulateurs d'oxyde d'azote sont contenus dans un système d'épuration des gaz d'échappement présentant un catalyseur à trois voies disposé près du moteur et deux catalyseurs accumulateurs d'oxyde d'azote à la suite.

Fig. 1

**N2O-Bildung**

Fig. 2

**N2O-Bildung**

Fig. 3

SU Pos. 1 & 2

TWC | CC-NSC | CC-NSC

AMA 1        AMA 2

Fig. 4

Magerphase

Regeneration

Magere Nachlaufzeit

Konditionierung für erneute Versuchsfolge

A B C D

**4x Wiederholung**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011101079 A1
- DE 19543219 C1
- DE 19641644 A1
- EP 1536111 B1
- DE 102010014468 A1
- DE 10249026 B4
- EP 1386656 A1
- GB 2424197 B
- WO 11124357 A1
- DE 102009039249 A
- DE 102008048854 A
- WO 13008342 A1
- WO 12140784 A1
- WO 2011023332 A
- WO 2005092481 A
- EP 1317953 A1
- EP 1016448 B1
- EP 1321186 B1
- EP 1911506 A
- EP 1101528 A
- EP 1837497 A1
- EP 1398069 A2
- DE 102013207709

**In der Beschreibung aufgeführte Nicht-Patentliteratur**

- **GIFHORN et al.** Einfluss abgasspezifischer Parameter auf die N2O-Bildung am Pd/Rh-Katalysator. *MTZ Motortechnische Zeitschrift,* 1998, vol. 59, 6
- **PIHL, JOSH A. ; LEWIS, JENNIFER A. ; TOOPS, TODD J. ; PARKS, JAMES E.** *Topics in Catalysis,* Mai 2013, vol. 56 (1-8), 89-93
- **MERCEDES BENZ ; WIEN.** *Der neue V6 Ottomotor mit Direkteinspritzung,* 2010
- **A. WALTNER et al.** V6 und V8-Ottomotoren. *MTZ extra,* April 2012
- **G. DOLL et al.** Handbuch Verbrennungsmotor. Vieweg Verlag, 2002
- **GUIDO VENT.** The new 2,0 l turbo engine. *Aachen,* 2012
- **LÜCKERT.** Potenziale strahlgeführter Brennverfahren in Verbindung mit Downsizing Konzepten. *Wiener Motorensymposium,* 2011
- Basshuysen/Schäfer. Handbuch Verbrennungsmotor. Vieweg Verlag, 2002
- **J. HADLER.** Der neue 2,0-I-TDI-Motor von Volkswagen für niedrigste Abgasgrenzwerte. *MTZ Mai 08*
- **F. ADAM et al.** Katalysatortechnologien für stöchiometrisch und mager betriebene Otto-Motoren mit dem Ziel der CO2 Reduktion, Kapitel 3. Verbesserung der Katalysatorformulierungen für die magere Abgasnachbehandlung. *Emission Control,* 2010